(19) Europäisches Patentamt
European Patent Office
Office européen des brevets

(11) **EP 2 196 958 A2**

(12) **EUROPEAN PATENT APPLICATION**

(43) Date of publication:
**16.06.2010 Bulletin 2010/24**

(51) Int Cl.:
***G06T 17/40*** *(2006.01)*

(21) Application number: **09179194.7**

(22) Date of filing: **15.12.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **15.12.2008 JP 2008318626**

(71) Applicant: **Fujifilm Corporation**
**Minato-ku**
**Tokyo (JP)**

(72) Inventors:
• **Morriya Yoshiyuki**
  **Tokyo (JP)**
• **Iwasaki, Taiji**
  **Tokyo (JP)**

(74) Representative: **Schmitt-Nilson, Gerhard**
**Klunker Schmitt-Nilson Hirsch**
**Patentanwälte**
**Destouchesstrasse 68**
**80796 München (DE)**

(54) **Image processing method, image processing apparatus, and image processing program**

(57) Pseudo three dimensional medical images that facilitate diagnosis of bone regions are generated from a plurality of medical images.

An image processing apparatus (10) includes: an image obtaining section (1) for obtaining medical images that represent transverse cross sections of a subject, and a division line setting section (2), for setting division lines within each medical image that divide subject regions representing the subject front to back, such that thoracic bones in the front to back direction of the projection direction of the subject are not displayed in an overlapping manner within the pseudo three dimensional images. A pseudo three dimensional medical image generating section (3) generates a first pseudo three dimensional medical image based image data representing subject regions toward first sides of the division lines within the medical images, and generates a second pseudo three dimensional medical image based on image data representing subject regions toward second sides of the division lines within the medical images, by executing intensity projection methods.

# FIG.2

START

OBTAIN PLURALITY OF MEDICAL IMAGES #1

SET DIVISION LINES WITHIN MEDICAL IMAGES #2

EXECUTE INTENSITY PROJECTION METHOD #3

GENERATE AND DISPLAY PSEUDO THREE DIMENSIONAL MEDICAL IMAGES #4

END

EP 2 196 958 A2

**Description**

BACKGROUND OF THE INVENTION

Field of the Invention

The present invention is related to an image processing method for generating pseudo three dimensional medical images. Particularly, the present invention is related to an image processing apparatus, an image processing method, and a computer readable medium, on which an image processing program for generating pseudo three dimensional medical images from a plurality of medical images by executing an intensity projection method is recorded.

Description of the Related Art

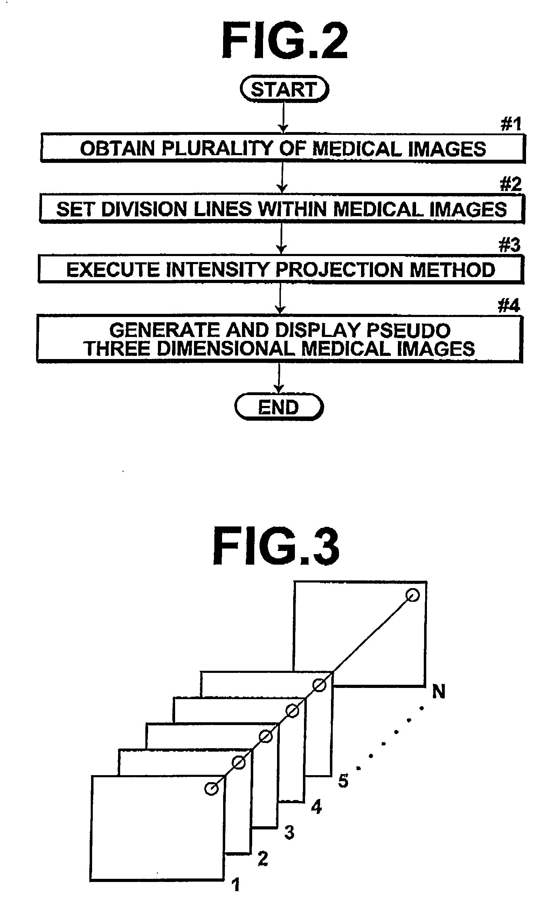

In the medical field, pseudo three dimensional medical images are generated by executing IP (Intensity Projection) methods that enable three dimensional medical images to be formed with respect to a plurality of medical images.
The IP methods are processes by which pixels having the maximum values (alternatively, minimum values or specified values) from among corresponding pixels within all original medical images, which are the targets of processing, are taken out and projected to obtain pseudo three dimensional medical images. That is, in the example illustrated in Figure 3, a pixel having the maximum value (alternatively, the minimum value or a specified value) from among corresponding pixels within the first through N$^{th}$ original medical images, which have been obtained in the depth direction, is taken out for all pixels, to enable obtainment of a pseudo three dimensional medical image.
An MIP (Maximum Intensity Projection) method that takes out pixels having the maximum values from among corresponding pixels within a plurality of medical images is an example of an IP method. However, because the density values of bone regions represented in medical images is high, there is a tendency for the bone regions to become particularly emphasized in pseudo three dimensional medical images which are generated by the MIP method, which cause difficulties for radiologists in performing diagnosis.
A technique that deletes bone regions as a preliminary process to be performed prior to such an intensity projection method is proposed in Japanese Unexamined Patent Publication No. 7(1995)-021351.
However, in this known image processing apparatus (refer to Japanese Unexamined Patent Publication No. 7(1995)-02135) that employs the intensity projection method, the bone regions are deleted. Therefore, there is a problem that the bone regions cannot be diagnosed.
In addition, it is common to perform image diagnosis of thoracic bones employing medical images (axial images). However, because the thoracic bones (particularly the ribs, the breastbone, and the thoracic vertebrae) are present separated from each other and close to the surface of the bodies of subjects, it is difficult for radiologists to diagnose bone regions that require careful viewing. Further, there is a problem that it is difficult to understand which ribs or thoracic vertebrae are pictured in medical images.
If the MIP method is employed to project subject regions represented by medical images, because the density values of bone regions represented in medical images is high, there is a tendency for the bone regions to become particularly emphasized. In addition, the thoracic bones in the front to back direction of the projection direction are displayed in an overlapping manner, which results in images which are difficult to use for diagnosis being generated.

SUMMARY OF THE INVENTION

The present invention has been developed in view of the foregoing circumstances. It is an object of the present invention to provide an image processing apparatus, an image processing method, and a computer readable medium having an image processing program recorded thereon, which are capable of generating pseudo three dimensional medical images that facilitate diagnosis of bone regions from a plurality of medical images.
An image processing apparatus of the present invention is an image processing apparatus for displaying pseudo three dimensional medical images, which are generated by executing an intensity projection method based on a plurality of medical images, which are obtained in advance, that represent transverse cross sections of a subject, characterized by comprising:

a division line setting section, for setting division lines within each of the plurality of medical images that divide subject regions that represent the subject in the front to back direction to display the subject regions separately, such that thoracic bones in the front to back direction of the projection direction of the subject are not displayed in an overlapping manner within the displayed pseudo three dimensional image;
a pseudo three dimensional medical image generating section, for generating a first pseudo three dimensional medical image by executing an intensity projection method based on a plurality of sets of image data that represent subject regions which are present toward first sides of the plurality of images which are divided by the division lines, and for generating a second pseudo three dimensional medical image by executing an intensity projection method based on a plurality of sets of image data that represent subject regions which are present toward second sides of the plurality of images which are divided by the division lines; and

a display section for displaying at least one of the first pseudo three dimensional medical image and the second pseudo three dimensional medical image.

The "division line setting section" sets the "division lines" within the medical images. The division lines are set to divide subject regions that represent the subject in the front to back direction to display the subject regions separately, such that thoracic bones in the front to back direction of the projection direction of the subject are not displayed in an overlapping manner within the displayed pseudo three dimensional image.

The "division line setting section" may set a line that passes through the center point of the surface of the subject's body as the division line for a predetermined medical image from among the plurality of medical images, and sets lines having the same coordinate positions as the division line of the predetermined medical image as the division lines in medical images among the plurality of medical images other than the predetermined medical image.

Alternatively, the "division line setting section" may set a line that passes through the center point of a predetermined medical image from among the plurality of medical images as the division line for the predetermined medical image, and sets lines having the same coordinate positions as the division line of the predetermined medical image as the division lines in medical images among the plurality of medical images other than the predetermined medical image.

As a further alternative, the "division line setting section" may set a line that passes through the center point of the outline of the subject's ribs within a predetermined medical image from among the plurality of medical images as the division line for the predetermined image, and sets lines having the same coordinate positions as the division line of the predetermined medical image as the division lines in medical images among the plurality of medical images other than the predetermined medical image.

As a still further alternative, the "division line setting section" may set a line that passes through two external tangential points along the surface of the subject's body within a predetermined medical image from among the plurality of medical images as the division line for the predetermined image, and sets lines having the same coordinate positions as the division line of the predetermined medical image as the division lines in medical images among the plurality of medical images other than the predetermined medical image.

The "pseudo three dimensional medical image generating section" generates pseudo three dimensional medical images, by executing an intensity projection method based on a plurality of sets of image data that represent the subject regions within the plurality of medical images. That is, the pseudo three dimensional medical image generating section generates the pseudo three dimensional medical images by searching for each point along each of a plurality of lines that connect a predetermined viewpoint and a plurality of projected pixels on a predetermined projection surface and selecting the pixel value of one of the points based on a predetermined first criterion. Note that central projection, which employs a single predetermined viewpoint, or parallel projection, which employs the same number of viewpoints as the number of projected pixels, may be performed as the intensity projection method.

The pseudo three dimensional medical image generating section may execute the intensity projection method employing the MIP method. This corresponds to a case in which the first criterion is that which selects the maximum pixel values.

The "first side" is the divided subject regions within the medical images toward a first side of the division lines. Examples of the first side include the side of the subject toward the subject's abdomen, and the left side of the subject.

The "second side" is the divided subject regions within the medical images toward a second side of the division lines, to be paired with the subject regions toward the first side of the division lines. Examples of the second side include the side of the subject toward the subject's back, and the right side of the subject.

In the image processing apparatus of the present invention, a configuration may be adopted wherein:

the division line setting section sets two division lines that divides subject regions that represent the subject into four regions within each of the plurality of medical images; and

the pseudo three dimensional medical image generating section generates four pseudo three dimensional medical images corresponding to the four regions by executing an intensity projection method, based on a plurality of sets of image data that represent four subject regions which are present within the four regions toward each side of the division lines.

The image processing apparatus of the present invention may further comprise:

an input section, for inputting specified points within the medical images; and

a calculating section, for calculating points within the pseudo three dimensional medical image corresponding to the specified points input within the medical images. In this case, a configuration may be adopted, wherein:

the display section displays the medical images, the pseudo three dimensional medical image, and markers that indicate the calculated corresponding points within the pseudo three dimensional medical image along with the pseudo three dimensional medical image.

The image processing apparatus of the present invention may further comprise:

an input section, for inputting specified points within the displayed pseudo three dimensional medical images; and a calculating section, for calculating points within the medical images corresponding to the specified points input within the pseudo three dimensional medical image. In this case, a configuration may be adopted, wherein:

the display section displays the medical images, the pseudo three dimensional medical image, and markers that indicate the corresponding points within the medical images along with the medical images.

Specifically, for example, the pseudo three dimensional medical image generating section may generate the pseudo three dimensional medical images by searching for each point along each of a plurality of lines that connect a predetermined viewpoint and a plurality of projected pixels on a predetermined projection surface and selecting the pixel value of one of the points based on a predetermined first criterion, then correlate the position of the selected point with the projected pixel that corresponds to the selected point. In this case, the calculating section determines the position of the corresponding point within the medical images that correspond to the specified point, based on the position which is correlated with the projected pixel.

Here, the pseudo three dimensional medical image generating section may select the selected point based on a predetermined second criterion in the case that there are a plurality of points that satisfy the first criterion.

Further, the "display section" may display a pseudo three dimensional medical image that includes the position corresponding to the specified point input by the input section.

In addition, the "display section" may display an image, in which the subject regions which are present toward the second sides of the division lines within the medical images are emphasized, and markers that indicate the projection direction of the intensity projection method within the second pseudo three dimensional medical image together.

Further, the pseudo three dimensional medical image generating section may change the projection direction of the intensity projection method, based on the position of the specified point input by the input section.

An image processing method of the present invention is an image processing method for displaying pseudo three dimensional medical images, which are generated by executing an intensity projection method based on a plurality of medical images, which are obtained in advance, that represent transverse cross sections of a subject, characterized by comprising the steps of:

setting division lines within each of the plurality of medical images that divide subject regions that represent the subject in the front to back direction to display the subject regions separately, such that thoracic bones in the front to back direction of the projection direction of the subject are not displayed in an overlapping manner within the displayed pseudo three dimensional image;
generating a first pseudo three dimensional medical image by executing an intensity projection method based on a plurality of sets of image data that represent subject regions which are present toward first sides of the plurality of images which are divided by the division lines, and for generating a second pseudo three dimensional medical image by executing an intensity projection method based on a plurality of sets of image data that represent subject regions which are present toward second sides of the plurality of images which are divided by the division lines; and
displaying at least one of the first pseudo three dimensional medical image and the second pseudo three dimensional medical image.

A computer readable recording medium of the present invention has recorded thereon an image processing program for displaying pseudo three dimensional medical images, which are generated by executing an intensity projection method based on a plurality of medical images, which are obtained in advance, that represent transverse cross sections of a subject, that causes a computer to execute the procedures of:

setting division lines within each of the plurality of medical images that divide subject regions that represent the subject in the front to back direction to display the subject regions separately, such that thoracic bones in the front to back direction of the projection direction of the subject are not displayed in an overlapping manner within the displayed pseudo three dimensional image;

generating a first pseudo three dimensional medical image by executing an intensity projection method based on a plurality of sets of image data that represent subject regions which are present toward first sides of the plurality of images which are divided by the division lines, and for generating a second pseudo three dimensional medical image by executing an intensity projection method based on a plurality of sets of image data that represent subject regions which are present toward second sides of the plurality of images which are divided by the division lines; and displaying at least one of the first pseudo three dimensional medical image and the second pseudo three dimensional medical image.

In the image processing apparatus, the image processing method, and the recording medium on which the image processing program is recorded, division lines are set within each of the plurality of medical images that divide subject regions that represent the subject in the front to back direction to display the subject regions separately, such that thoracic bones in the front to back direction of the projection direction of the subject are not displayed in an overlapping manner within the displayed pseudo three dimensional image. Therefore, pseudo three dimensional medical images that facilitate diagnosis of bone regions, and also enable the position of the bone region within the subject as a whole to be understood, can be generated and displayed.

A configuration may be adopted, wherein specified points are input within medical images which are displayed, the positions of corresponding points within pseudo three dimensional medical images that correspond to the specified points within the medical images are calculated, and markers that indicate the calculated corresponding points are displayed along with the pseudo three dimensional medical images. In this case, positions within the pseudo three dimensional medical images that correspond to the specified points within the medical images can be easily understood. Particularly, which bone within a pseudo three dimensional medical image corresponds to a bone specified by a specified point within a medical image can be easily understood.

Further, a configuration may be adopted, wherein specified points are input within pseudo three dimensional medial images which are displayed, the positions of corresponding points within medical images that correspond to the specified points within the medical images are calculated, and markers that indicate the calculated corresponding points are displayed along with the medical images. In this case, positions within the medical images that correspond to the specified points within the pseudo three dimensional medical images can be easily understood. Particularly, the position within a medical image that a diseased portion specified by a specified point within a pseudo three dimensional medical image is present at can be easily understood.

BRIEF DESCRIPTION OF THE DRAWINGS

Figure 1 is a block diagram that illustrates the schematic configuration of an image processing apparatus according to a preferred embodiment of the present invention.
Figure 2 is a flow chart that illustrates the steps of a process for generating pseudo three dimensional medical images executed by the preferred embodiment of the present invention.
Figure 3 is a diagram for explaining the process of intensity projection methods.
Figure 4 is a diagram that illustrates an example of pseudo three dimensional medical images generated by a method of the present invention.
Figure 5 is a diagram that illustrates examples of diseased bone portions within a pseudo three dimensional medical image generated by the embodiment of the present invention.
Figure 6 is a collection of diagrams that illustrate examples of division lines which are set within medical images by the embodiment of the present invention.
Figure 7 is a diagram that illustrates another example of a division line which his set within a medical image by the embodiment of the present invention.
Figure 8 is a graph that illustrates an example of pixel values along a line which is a target of searching in an MIP process.
Figure 9 is a flow chart that illustrates a series of processes for setting detailed processing conditions of an MIP process.
Figure 10 is a diagram that illustrates an example of an image which is displayed by a display section of the embodiment of the present invention.

DESCRIPTION OF THE PREFERRED EMBODIMENTS

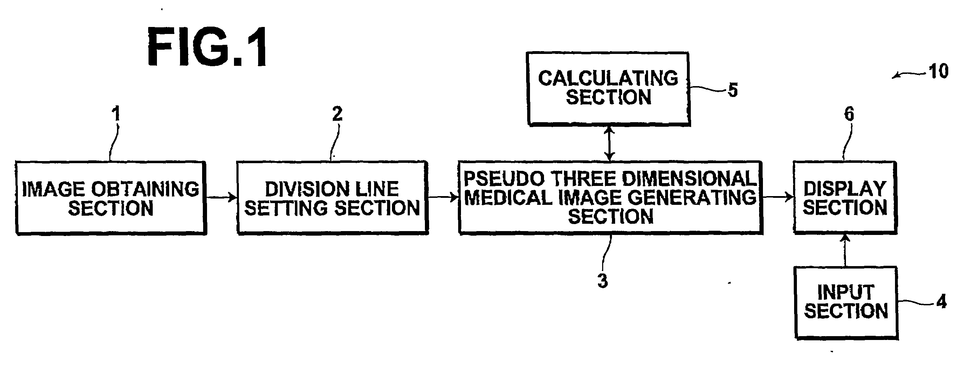

Hereinafter, an embodiment of the present invention will be described with reference to the attached drawings.
An image processing apparatus 10 illustrated in Figure 1 is equipped with: an image obtaining section 1, for obtaining a plurality of medical images that represent transverse sections of a subject, which have been imaged in advance; a division lines setting section 2, for setting division lines within each of the plurality of medical images that divide subject regions that represent the subject in the front to back direction to display the subject regions separately, such that thoracic bones in the front to back direction of the projection direction of the subject are not displayed in an overlapping manner within pseudo three dimensional images (coronal images); a pseudo three dimensional medical image generating section 3, for generating a first pseudo three dimensional medical image by executing an intensity projection method based on a plurality of sets of image data that represent subject regions which are present toward first sides of the plurality of images which are divided by the division lines, and for generating a second pseudo three dimensional medical image by executing an intensity projection method based on a plurality of sets of image data that represent subject regions which are present toward second sides of the plurality of images which are divided by the division lines; a display section 6, for displaying the pseudo three dimensional medical image and/or the medical images; input section 4, for inputting specified points within the displayed medical images or the displayed pseudo three dimensional medical image; and a calculating section 5, to be described later.

The image obtaining section 1 obtains a plurality of medical images by reading out a recording medium in which the plurality of medical images (CT images and MRI images, for example) are recorded. Alternatively, the image obtaining section 1 obtains a plurality of medical images from a CT (Computed Tomography) apparatus or an MRI (Magnetic Resonance Imaging) apparatus via a communication network. As a further alternative, the image obtaining section 1 itself may be a CT apparatus or an MRI apparatus.

The division line setting section sets division lines within each of the medical images that divide subject regions that represent the subject in the front to back direction to display the subject regions separately, such that thoracic bones in the front to back direction of the projection direction of the subject are not displayed in an overlapping manner within pseudo three dimensional images. The division lines setting section 2 performs a preliminary process in order to prevent thoracic bones in the front to back direction of the projection direction of the subject from being displayed in an overlapping manner within pseudo three dimensional images. For this reason, in view of the fact that thoracic bones are arranged toward the interiors of the surfaces of bodies in a cylindrical shape, medical images are divided into two areas by division lines that pass through the center points of the medical images (axial images). By executing an intensity projection method in a direction substantially perpendicular to the division line (and also substantially perpendicular to the axis of the bodies of subjects), a pseudo three dimensional medical image in which thoracic bones do not overlap can be generated.

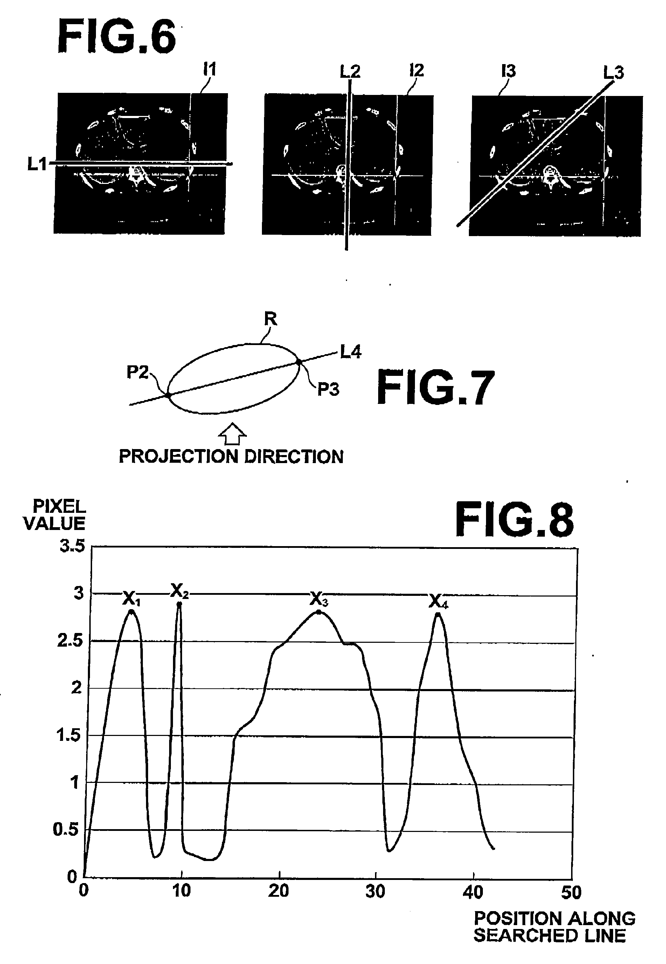

The division line setting section 2 sets a division line L1 within a medical image I1 as illustrated in Figure 6, for example. The division line L1 is set to pass through the center point (or the approximate center point) of the subject within the medical image (axial image) while being parallel to the side edges of the medical image. Lines having the same XY coordinates (coordinates along the horizontal and vertical axes of the axial images) as the division line L1 are set in all of the other images, to set a plane that includes all of the division lines as a slice plane which is perpendicular to all of the medical images.

Alternatively, the division line setting section 2 may set a division line L2 within a medical image I2 as illustrated in Figure 6. The division line L2 is set to pass through the center point (or the approximate center point) of the subject within the medical image (axial image) while being parallel to the top edge of the medical image. Lines having the same XY coordinates as the division line L2 are set in all of the other images, to set a plane that includes all of the division lines as a slice plane which is perpendicular to all of the medical images. By setting the division lines in this manner, the division line setting section 2 divides the subject regions within the medical images into a side toward the subject's abdomen and a side toward the subject's back, or toward the right and left sides of the subject.

As a further alternative, the division line setting section 2 may set a division line L3 within a medical image I3 as illustrated in Figure 6. The division line L3 is set to pass through the center point (or the approximate center point) of the subject within the medical image (axial image) while being inclined with respect to the medical image. Lines having the same XY coordinates as the division line L3 are set in all of the other images, to set a plane that includes all of the division lines as a slice plane which is perpendicular to all of the medical images.

The division line setting section 2 may set lines that pass through the center point of the medical image as a whole, instead of the center point of the subject within the medical image.

The division line setting section 2 may set lines that pass through the center point of the outline of the ribs of the subject within the medical image, instead of the center point of the subject within the medical image

As a still further alternative, the division line setting section 2 may set a line that connects predetermined external tangential points P2 and P3 along the surface of the subject's body R as a division line L4, as illustrated in Figure 7.

As a still yet further alternative, the division line setting section may set two division lines that divides subject regions that represent the subject into four regions (front, back, right, and left) within each of the plurality of medical images. In this case, the pseudo three dimensional medical image generating section 3 generates four pseudo three dimensional medical images corresponding to the four regions by executing an intensity projection method in four directions. The number of regions that the medical image is divided into and the number of directions in which intensity projection is performed is not limited to four, and may be any number which is three or greater.

In this case, the three or more pseudo three dimensional medical images which are generated based on these regions possess the advantage that discontinuities at the borderline portions, which are present in the case that intensity projection is performed only in two directions, can be eliminated.

In addition, the division line setting section 2 sets a division line as described above within a medical image as described above, and sets division lines having the same coordinate positions as the set division line within all of the other medical images, to set a plane that includes all of the division lines as a slice plane which is perpendicular to all of the medical images. However, positions of the division lines may be corrected such that the slice plane is parallel to an axis parallel to the direction of the axis of the subject's body (central axis of the subject's body). The division line setting section 2 may obtain the central axis of the subject's body by averaging the XY coordinates (coordinates along the horizontal and vertical axes of the axial images) of the centers of the subject's body within a plurality of medical images, or by a statistical process, such as the method of minimum squares.

The division line setting section 2 detects the surface of the subject's body by the following method. Specifically, pixels are within the medical images are classified into high density pixels having image densities greater than or equal to a predetermined reference density value and low density pixels having image densities less than the reference density value.

Next, boundary lines of the high density image regions are extracted, and the two dimensional high density image regions are labeled with numbers to discriminate the high density image regions. Then, connections among two dimensional high density images in the direction of the Z axis are analyzed, and series of high density image groups which are connected in the direction of the Z axis are extracted. Thereafter, a list of line shapes is tracked, a sum of the areas and a sum of the peripheral lengths of high density image regions included in pluralities of linked label data are calculated, and the volumes of three dimensional medical image regions formed by the outlines of the series of high density image groups are estimated. Next, the label data of each high density image that constitutes a high density image group which is determined to be a candidate for the surface of the subject's body is analyzed in order from smaller slice numbers, and a first changing point where the area of the high density image region decreases drastically and the peripheral length of the high density image region increases drastically between pieces of label data having consecutive slice numbers is searched for. When a hole filling process is completed, the position of the surface of the subject's body is ultimately determined.

Alternatively, the division line setting section 2 may employ the technique disclosed in Japanese Patent Application No. 2007-256290, for example. In this technique, a binarizing process is administered on each of the plurality of medical images, using a predetermined image density value as a reference. Then, one of two types of image regions, which have been divided by the binarizing process, within a medical image is classified as one of the subject region that represents the interior of the surface of the subject's body and the non subject region that represents the exterior of the surface of the subject's body, based on the positional relationship with an image region of the other type within the medical image, and based on the positional relationship with image regions of the other type which have been extracted from other medical images.

Each of the plurality of tomographic images are binarized with the predetermined image density value as a reference. Each image pictured within the binarized tomographic images is classified as either belonging to a first image group that includes images of the interior of the subject's body and a second image group that includes images of the exterior of the subject's body, based on the positional relationship of the image with other images within the same tomographic image, and based on the positional relationship with other images within other tomographic images. In this manner, each image within the tomographic images is classified taking the three dimensional shape of the image group that it belongs to into consideration, in addition to the two dimensional shape thereof. Therefore, images of lungs, which have low image densities, can be accurately classified as images within the subject's body, based on the positional relationships thereof with other images.

It is preferable for the division line setting section 2 to classify series of images which are connected among a plurality of tomographic images in the same image groups. The division line setting section 2 classifies image regions which are separated at a given cross section but are connected three dimensionally into the same image group. Therefore, a problem that a portion of the subject which is pictured separately in certain tomographic images become erased can be reduced.

It is preferable for the division line setting section 2 to classify images surrounded by another image in the same image group as the other image.

The division line setting section 2 is capable of accurately classifying image regions which are within the body of the subject and have low image densities, such as lung field regions, as images within the subject's body. It is preferable for the division line setting section 2 to reclassify image regions from among image regions classified into a second image group, which are present within a tomographic image between image regions classified into a first image group and are sandwiched between image groups classified into the first image group in a predetermined direction, into the first image group.

Alternatively, the region classifying section may administer a binarizing process on each of the plurality of medical images, using a predetermined image density value as a reference, and classify image regions within the medical images, which have been divided by the binarizing process, other than image regions at the edges of a medical image and image regions that connect with the image regions at the edges of the medical image to form a collective region as the subject regions, and classify the collective image region as the non subject region, by the two dimensional labeling.

Note that the division line setting section 2 may set the body surface region classified by the methods described above as the subject region.

The pseudo three dimensional medical image generating section 3 generates pseudo three dimensional medical image by executing an intensity projection method based on a plurality of sets of image data that represent subject regions which are present toward the sides of the plurality of images which are divided by the division lines set by the division line setting section 2. Examples of the intensity projection method include the minIP method and the MIP method.

The pseudo three dimensional medical image generating section 3 may easily display tomographic images along a cross sectional direction different from the cross sectional direction of a medical image included in a coronal image, at a position specified within the coronal image, by employing the method disclosed in Japanese Unexamined Patent Publication No. 2008-093254, such that the positions and shapes of diseased portions can be understood accurately. In addition, thoracic bones can be discriminated, and each of the discriminated thoracic bones can be labeled. Further, the projection direction is not limited to directions from the exterior of the surface of the body of the subject, and may be a direction from the interior of the body of the subject toward the exterior.

The pseudo three dimensional medical image generating section 3 may also be capable of extracting image regions appearing in the medical images that represent objects other than the subject having high brightness, such as beds, and deleting the extracted image regions.

The pseudo three dimensional medical image generating section 3 may also be capable of changing the projection direction of the intensity projection method, based on the position of a specified point input by the input section 4, to be described later.

The display section 6 is a monitor, a CRT screen, a liquid crystal display or the like for displaying the medical images (axial images) or the pseudo three dimensional medical images (coronal images).

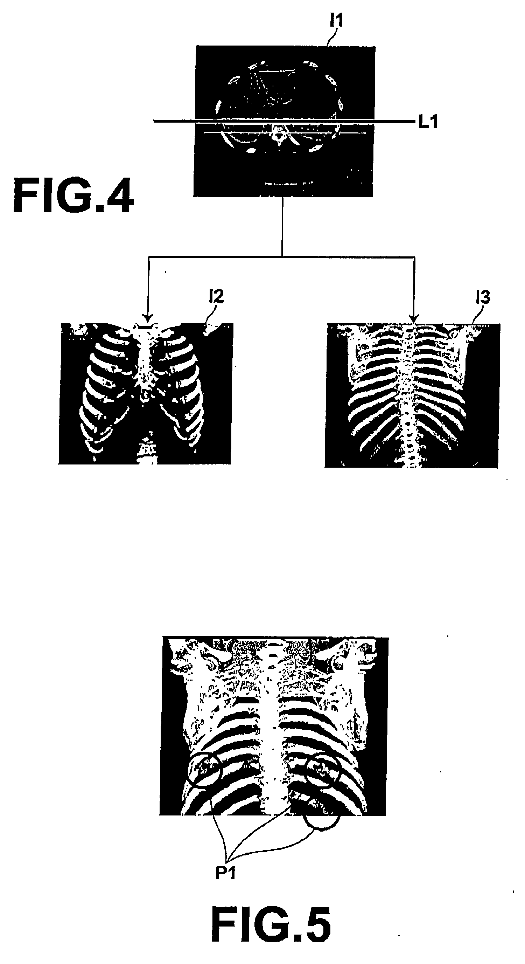

It is desirable for an initial screen of the display section 6 to have few overlaps in the direction of projection and to display a coronal image in the direction that the subject is facing. The display section 6 displays a pseudo three dimensional image such as that illustrated in Figure 5, which enables the position of diseased portions P1 while facilitating understanding of which bone the diseased portions P1 are present at.

According to initial settings, the display section displays the coronal image such that the side of the subject's head appears at the top and the side of the subject's feet appears at the bottom. In addition, the display section 6 may display a marker that indicates the right side or the left side of the subject pictured in the coronal image.

In addition, the display section 6 may be capable of synthesizing an image, in which subject regions which are present toward one side of the division lines are emphasized, and a marker that indicates the projection direction of the intensity projection method within the pseudo three dimensional medical image generated from the subject regions.

The image processing apparatus 10 is equipped with the input section 4, for inputting specified points within the medical images which are displayed by the display section 6; and the calculating section 5, for calculating points within the pseudo three dimensional medical image corresponding to the specified points input within the medical images. The display section 6 displays markers that indicate the corresponding points within the pseudo three dimensional medical image, along with the pseudo three dimensional medical image.

The image processing apparatus 10 may also be equipped with the input section 4, for inputting specified points within the pseudo three dimensional medical image which is displayed by the display section 6; and a calculating section 5, for calculating points within the medical images corresponding to the specified points input within the pseudo three dimensional medical image. The display section 6 may display markers that indicate the corresponding points within the medical images, along with the medical images. At this time, the display section 6 may also display a pseudo three dimensional medical image that includes a position corresponding to the specified point input by the input section 4.

Note that the image processing apparatus 10 is realized by executing an image processing program, which is recorded in an auxiliary memory device, on a computer (a personal computer, for example).

The image processing program may be recorded on data recording media such as CD-ROM's, or distributed via networks such as the Internet from a memory device of a server in which the image processing program is recorded, and then installed in the computer.

Figure 2 is a flow chart that illustrates the steps of a procedure for generating pseudo three dimensional medical images.

First, the image obtaining section 1 obtains a plurality of typical CT images, which are medical images (axial images) that represent slices of a subject from the subject's chest to the subject's legs (step #1).

The division line setting section 2 sets division lines by the method described above within each of the plurality of CT images obtained by the image obtaining section 1 that divide subject regions that represent the subject in the front to back direction to display the subject regions separately, such that thoracic bones in the front to back direction of the projection direction of the subject are not displayed in an overlapping manner when pseudo three dimensional images are displayed by the display section 6 (step #2).

Then, the pseudo three dimensional medical image generating section 3 executes the MIP method based on a plurality of pieces of image data that represent the subject regions which are present toward a first side of the division lines (toward the abdomen, for example), to generate a first pseudo three dimensional medical image 12 as illustrated in Figure 4. In addition, the pseudo three dimensional medical image generating section 3 executes the MIP method based on a plurality of pieces of image data that represent the subject regions which are present toward a second side of the division lines, to generate a second pseudo three dimensional medical image I3 as illustrated in Figure 4 (step #3). Note that the minIP method may be employed instead of the MIP method.

The display section 6 displays coronal images generated yb the pseudo three dimensional medical image generating section 3, indicated by I2 and I3 of Figure 4 (step #4). The display section 6 is capable of switching between display of a first coronal image (the first pseudo three dimensional medical image) and a second coronal image (the second pseudo three dimensional medical image) in response to commands input by the input section 4.

Next, display of pseudo three dimensional medical images (coronal images) along with medical images (CT images) will be described as an embodiment of operation of the display section 6.

First, a case in which a single division line is set within each medical image by the division line setting section 2 will be described. For example, the display section 6 displays two coronal images I2 and I3 together with a CT image I1, as illustrated in Figure 4. Then, when the input section 4 receives input of a specified point, which is specified within the CT image 11 displayed by the display section 6, the calculating section 5 selects a coronal image that includes the specified point, from the XY coordinates thereof. The calculating section 5 determines the height position (a Z coordinate that indicates the height position from the subject's legs) of the specified point within the CT image I1. The display section 6 displays a label (a mark or a point, for example) that indicates a corresponding point at a position that corresponds to the Z coordinate and the XY coordinates of the specified point along with the selected coronal image, and does not display the coronal image which was not selected. Alternatively, both of the coronal images may be displayed, without the marker that indicates the corresponding point not being displayed in the coronal image which was not selected.

Note that the method disclosed in Japanese Unexamined Patent Publication No. 2002-006044 with regard to PET images may be applied to display the coronal image with the CT images.

By adopting this configuration, wherein specified points are input within medical images which are displayed, the positions of corresponding points within pseudo three dimensional medical images that correspond to the specified points within the medical images are calculated, and markers that indicate the calculated corresponding points are displayed along with the pseudo three dimensional medical images, positions within the pseudo three dimensional medical images that correspond to the specified points within the medical images can be easily understood. Particularly, which bone within a pseudo three dimensional medical image corresponds to a bone specified by a specified point within a medical image can be easily understood.

Further, a configuration may be adopted, wherein a user may specify points within coronal images which are displayed by the display section 6, markers that indicate the specified points are displayed, and calculated corresponding points are displayed along with the medical images by the display section 6. In this case, the pseudo three dimensional medical image generating section 3 may store the positions of pixels having the maximum pixel values during the MPI process, correlated with each pixel of the coronal images, in a memory of the image processing apparatus 10. When the user specifies points within the coronal images, the positions correlated to the specified points may be obtained from the memory, and set as the corresponding points.

By adopting this configuration, wherein specified points are input within pseudo three dimensional medical images which are displayed, the positions of corresponding points within medical images that correspond to the specified points within the medical images are calculated, and markers that indicate the calculated corresponding points are displayed along with the medical images by the display section 6, positions within the medical images that correspond to the specified points within the pseudo three dimensional medical images can be easily understood. Particularly, the position within a medical image that a diseased portion specified by a specified point within a pseudo three dimensional medical image is present at can be easily understood.

In the embodiments of the operations of the display section 6 described above, the pseudo three dimensional medical image generating section 3 generates the pseudo three dimensional medical images by searching for points having the maximum pixel values along each of a plurality of lines that pass through a predetermined viewpoint and a plurality of projected pixels (each pixel of the pseudo three dimensional medical image) on a predetermined projection surface (coronal cross section) and are perpendicular to the projection surface. In the case that there are a plurality of points having maximum pixel values on a line that corresponds to a projected pixel, and this projected pixel is input by the input section 4 as the specified point, the corresponding point within the medical images (axial images) that corresponds to the projected pixel cannot be uniquely determined.

Therefore, the display section 6 cannot accurately display a marker that corresponds to the corresponding point on the medical image.

Therefore, it is preferable for the pseudo three dimensional medical image generating section 3 to determine the positional data to be correlated to each projected pixel, based on selection criteria regarding which point is to be selected in the case that there are a plurality of points at which the pixel value becomes maximal. Examples of the selection criteria include: selecting the point having the maximum pixel value that was found first during the search for the maximum pixel value; and selecting the point having the maximum pixel value that was found last. In addition, it is preferable for an interface to be provided that prompts a user to select the selection criteria, such that the user can select the selection criterion via the input section 4.

In addition, in the conventional MIP processing method, the appropriateness of the maximum pixel value is not taken into consideration. Therefore, in the case that the maximum pixel value which is found is a noise component, for example, the noise component is included in a pseudo three dimensional medical image which is generated.

Therefore, the pseudo three dimensional medical image generating section may calculate integrated values of pixel values of each of the points within a predetermined search range in the vicinities of each point along the lines, which are the targets of searching, during the search along the lines, and select the pixel value of the point at which the integrated value becomes maximal. For example, the pixel value of a point that has the maximum integrated value $V(X_k)$, represented by Formula (1), can be designated as the maximum pixel value, according.

$$V(x_k) = \int_{x_k-s}^{x_k+s} v(x)dx \qquad (1)$$

Here, a collection of searched points (local maximum searched points), which are the target of searching having locally maximal pixel values along a line, is designated as $\{x_1, x_2, x_3, ..., x_k,..., x_n\}$; and the integrating range is set to $x_k-s \leq x_k \leq x_k+s$.

Here, $v(x)$ is the pixel value at a search target point. Note that whether a search target point is a local maximum searched point can be judged by obtaining changes in pixel values among points adjacent to the search target point. If the pixel value of the search target point is greater than that of a preceding point and also greater than that of a following point, then the search target point can be judged to be a local maximum searched point.

Figure 8 is a graph that illustrates an example of pixel values along a line which is a target of searching. In this example, if only the pixel values of each point along the lines are focused on, as in the conventional MIP process, the pixel value of point $X_2$ is the maximum pixel value. However, in the case that the pixel values in the vicinity of point $X_2$ change drastically, point $X_2$ represents a noise component, and is not appropriate as a point having the maximum pixel value. On the other hand, the method that employs integrated values described above takes the pixel values of points in the vicinity of each of the local maximum points $X_1$, $X_2$, $X_3$, and $X_4$, into consideration. As a result, the pixel value of point $X_3$, having large pixel values in the vicinity thereof, becomes the maximum pixel value. In this manner, it becomes possible to find points having maximum pixel values with high reliability.

In the case that there are a plurality of local maximum points that satisfy Formula (1) such that the integrated values become maximal even if the integrated values are employed, the point having the maximum pixel value can be determined based on the aforementioned selection criteria.

Alternatively, an allowable range maybe set for the maximum value of the integrated values, and a point having local maximum values within the allowable range of integrated values may be determined to be the point having the maximum pixel value. For example, in the case that the allowable range is designated as ε and the maximum integrated value when ε=0 is designated as $V_{max}$, local maximum searched points that satisfy Formula (2) may be designated as candidates for a point having the maximum pixel value, and a point that satisfies the aforementioned selection criterion may be selected as the point having the maximum pixel value.

$$V_{max} - \varepsilon \leq V(x_k) \qquad (2)$$

As a further alternative, the pseudo three dimensional medical image generating section 3 may focus only on the pixel values of the points which are searched without employing the integrated value, while imparting an allowable range for the maximum pixel value. In this case, the point that satisfies the selection criteria from among the points having pixel values within the allowable range may be determined to be the point having the maximum pixel value. For example, the pixel value of a local maximum point that has the maximum value $v_{max}$ can be designated as the maximum pixel value, according to Formula (3).

$$v_{max} - \varepsilon \leq v(x_k) \qquad\qquad (3)$$

Here, a collection of local maximum searched points which are the target of searching is designated as $\{x_1, x_2, x_3, ..., x_k, ..., x_n\}$; e is designated as an allowable range of error; and $v_{max}$ is the maximum pixel value when $\varepsilon=0$.

In the example illustrated in Figure 8, in the case that local maximum searched points $X_1$, $X_3$, and $X_4$ satisfy Formula (3) above with respect to point $X_2$, which has the maximum pixel value along this line, and the selection criterion is that which selects the local maximum searched point that satisfies Formula (3) and appears first, then point $X_1$ is selected as the point having the maximum pixel value. In the case that the selection criterion is that which selects the local maximum searched point that satisfies Formula (3) and appears last, then point $X_4$ is selected as the point having the maximum pixel value.

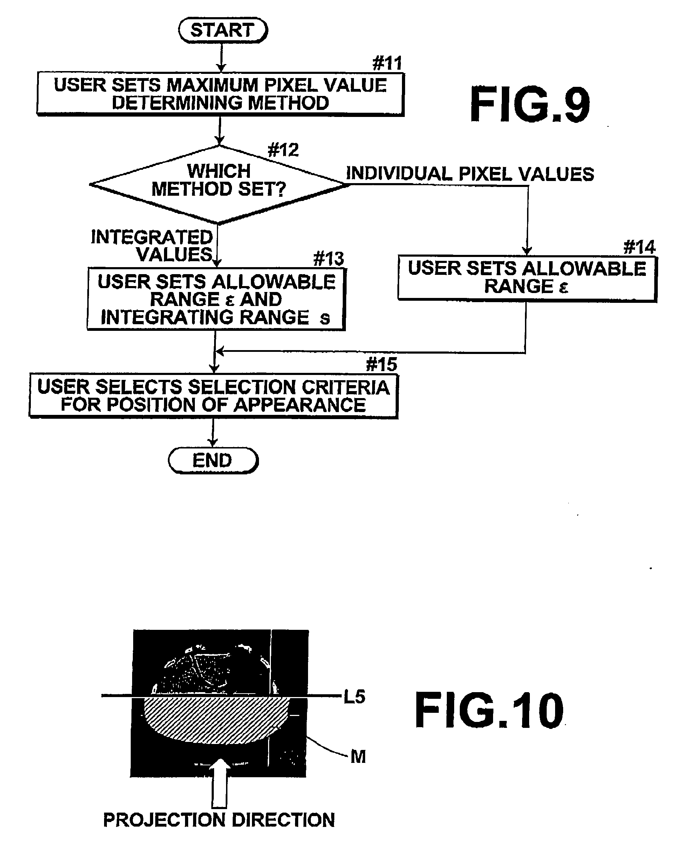

Further, the method in which only the pixel values of the points which are searched for and the method in which the integrated values are employed may be selectable. Figure 9 is a flow chart that illustrates the series of processes which are performed in the case that a user selects the selection method and the selection criteria. The processes illustrates in Figure 9 are performed prior to step #3 of the flow chart illustrated in Figure 2. As illustrated in Figure 9, first, the user selects the selection method for the maximum pixel value (step #11). In the case that the method that employs integrated values is set (step # 12: INTEGRATED VALUES), the user sets the allowable range $\varepsilon$ and the integrating range s (step #13). In the case that the method that employs only the pixel values of the points to be searched is selected (step #12: INDIVIDUAL PIXEL VALUES), the user sets the allowable range $\varepsilon$ (step #14). Finally, the user selects the selection criterion (selecting the position of first appearance or selecting the position of last appearance) in the case that a plurality of points having the maximum pixel value are present (step #15). Note that the above operations are performed by employing the input section 4, by a user interface regarding each of the settings and selections displayed by the display section 6.

In addition, in the above operational embodiments of the display section 6, a configuration may be adopted, in which the display section 6 displays bone numbers attached by the pseudo three dimensional medical image generating section 3 simultaneously with the two coronal images, which are generated.

Thereby, the bone numbers and the thoracic bones that they denote are correlated, and enables recognition of each of the bones to be facilitated. At this time, it is desirable for the pseudo three dimensional medical image generating section 3 to generate the coronal image toward the side of the abdomen at a gradation that extracts rib cartilage, such that the connective relationships among the ribs and the breastbone can be understood, and for the pseudo three dimensional medical image generating section 3 to generate the coronal image toward the back at a gradation that enables discrimination of the vertebrae, to facilitate counting of the vertebrae.

Next, a case in which two division lines are set within the medical images by the division line setting section 2 will be described.

The division line setting section 2 sets two division lines to divide the subject regions that represent the subject into four regions, within each of the plurality of medical images. The pseudo three dimensional medical image generating section 3 generates four pseudo three dimensional medical images corresponding to the four regions by executing an intensity projection method, based on a plurality of sets of image data that represent four subject regions which are present within the four regions toward each side of the division lines.

At this time, the input section 4 may receive user input regarding a specified point within a CT image I1 displayed by the display section 6. In this case, the calculating section 5 calculates a corresponding point that corresponds to the specified point having XY coordinates and a height position (a Z coordinate that indicates the height position from the subject's legs), within one of the pseudo three dimensional medical images which is the closest in the direction of the projection direction to the center point of the CT image divided by the division lines set by the division line setting section 2. Then, the display section 6 displays a marker that indicates the corresponding point.

In the case that the input section 4 received input of a specified point within the CT image I1 displayed by the display section 6, the calculating sections 5 calculates the corresponding point having the XY coordinates and the height position (a Z coordinate that indicates the height position from the subject's legs) within the CT image I1 in which the point was specified, and calculates the pseudo three dimensional medical image that includes the corresponding point.

The display section 6 displays the marker that indicates the corresponding point only with the single pseudo three dimensional medical image that includes the corresponding point having the Z coordinate and the XY coordinates of the specified point calculated by the calculating section 5. The marker that indicates the corresponding point is not displayed along with the other coronal images.

In the case that a plurality of pseudo three dimensional medical images are displayed by the display section 6, the pseudo three dimensional medical image generating section 3 generates data in which the coronal images are rotated, by receiving input of rotation commands via the input section. Thereafter, the display section 6 may be capable of displaying rotation of the pseudo three dimensional images, as moving images. Note that in the case that the specified point or the corresponding point are input, the labels are displayed by tracking the rotation. The method for tracking rotation disclosed in Japanese Patent application No. 2008-145402 may be applied. In addition, it is possible for the input section 4 (a mouse, for example) to control the rotation.

Note that in the case that input of a specified point is received via the input section 4 as described above, the pseudo three dimensional medical image may be displayed as a rotating moving image, along with the corresponding point.

In addition, if the input section 4 receives input of a specified point outside of the subject region of a CT image displayed by the display section 6, or the calculating section 5 calculates a corresponding point outside the subject region of a CT image, a display command to display an error message by the display section 6 may be issued.

Alternatively, of the input section 4 receives input of a specified point outside of the subject region of a CT image displayed by the display section 6, the region of the image or the projection direction in which the MIP method is to be executed may be determined according to the position of the specified point. Specifically, a direction from the position of the input specified point (the X coordinate and the Y coordinate within the CT image) to the center point calculated by the division line setting section 2 is designated as the projection direction, and the intensity projection method (the MIP method) is executed with respect to regions toward the side of the specified point for a plane that passes through the center point and which is parallel to the projection direction.

Next, emphasized display of the medical images (axial images) will be described as a second embodiment of the operation of the display section 6.

According to the second embodiment, the image processing apparatus 10 is capable of displaying an image M, in which the subject region toward a second side of a division line L5 set by the division line setting section 2 within a medical image (CT image) is emphasized, and a marker (text, for example) that indicates the projection direction of an intensity projection method within a pseudo three dimensional medical image (coronal image) are displayed together, as illustrated in Figure 10.

The display section 6 may be set to switch the display of the image M as well as the display of the text or the like that indicates the projection direction ON and OFF by commands input via the input section 4. In addition, in the case that a plurality of pseudo three dimensional medical images (coronal images) are displayed by the display section 6, a marker that indicates the projection direction of a single pseudo three dimensional medical image (a single coronal image) which is specified by a command input via the input section 4 may be displayed. Alternatively, markers that indicate the projection direction of all of the pseudo three dimensional medical images may be displayed. Only the outline of the subject region which is present within the second side of the division line L5 maybe emphasized and displayed, instead of the image M. In addition, the image M may be semitransparent, in order to enable viewing of the subject region prior to combined display. Note that the image processing apparatus 10 may be configured such that the degree of transparency of the image M is adjustable by a user via the input section 4.

As described above, the embodiment of the present invention sets division lines within each of the plurality of medical images that divide subject regions that represent the subject in the front to back direction to display the subject regions separately, such that thoracic bones in the front to back direction of the projection direction of the subject are not displayed in an overlapping manner within the displayed pseudo three dimensional image. Therefore, pseudo three dimensional medical images that facilitate diagnosis of bone regions, and also enable the position of the bone region within the subject as a whole to be understood, can be generated and displayed.

In the embodiment described above, a case has been described in which all of the processes, that is, obtaining the plurality of medical images, generating the pseudo three dimensional medical images with the user performing operations via an interactive interface as necessary, and displaying the generated pseudo three dimensional medical images and the medical images in various manners, by the image processing program of the present invention being installed on a computer. Alternatively, it is possible to perform the image processes and the display of images by different apparatuses, within a conventional PACS (Picture Archive and Communication System).

Specifically, a system, in which: an image storage server, for storing medical images and pseudo three dimensional medical images; an image processing work station, for performing the image processing method of the present invention; and a client terminal, for displaying the images according to the display methods of the present invention; are connected such that they can communicate via a network, may be configured. The image processing workstation obtains the plurality of medical images, and generates pseudo three dimensional medical images (MIP images) for each of the sides of the medical images divided by the division lines, based on imaging protocols and examination orders. In addition, Z buffer data, in which each pixel of the pseudo three dimensional medical images is correlated with the position of the point of which the pixel value was projected, is generated. The generated pseudo three dimensional medical images and the Z buffer data are correlated and stored in the image storage server. Here, in the case that the system is configured in compliance with DICOM, a pseudo three dimensional medical image and a set of Z buffer data can be handled as a single DICOM file. Alternatively, a discriminating code may be attached to each set of Z buffer data, and the discriminating code may be correlated as additional information to each pseudo three dimensional medical image. Next, the client terminal obtains the pseudo three dimensional medical images and the Z buffer data from the image storage server, and displays the pseudo three dimensional medical images on a display of the client terminal. In the case that a user specifies a point within the displayed pseudo three dimensional medical images, the client terminal determines the position of the specified point, employing the Z buffer data. The client terminal requests the medical image corresponding to the determined position from the image storage server, and displays the medical image transmitted thereto from the image storage server along with the pseudo three dimensional medical image. Further, the client terminal displays a marker that indicates the position of the specified point within the medical image, along with the medical image.

In the case that the present invention is applied within a PACS environment, combined display of the pseudo three dimensional medical images and the medical images can be realized, even in the case that it is not possible to obtain a plurality of medical images in advance, due to restrictions in communications networks or in the memory capacity of an image display device.

**Claims**

1. An image processing apparatus (10) for displaying pseudo three dimensional medical images, which are generated by executing an intensity projection method based on a plurality of medical images, which are obtained in advance, that represent transverse cross sections of a subject, comprising:

   a division line setting section (2), for setting division lines within each of the plurality of medical images that divide subject regions that represent the subject in the front to back direction to display the subject regions separately, such that thoracic bones in the front to back direction of the projection direction of the subject are not displayed in an overlapping manner within the displayed pseudo three dimensional image;
   a pseudo three dimensional medical image generating section (3), for generating a first pseudo three dimensional medical image by executing an intensity projection method based on a plurality of sets of image data that represent subject regions which are present toward first sides of the plurality of images which are divided by the division lines, and for generating a second pseudo three dimensional medical image by executing an intensity projection method based on a plurality of sets of image data that represent subject regions which are present toward second sides of the plurality of images which are divided by the division lines; and
   a display section (6) for displaying at least one of the first pseudo three dimensional medical image and the secondpseudo three dimensional medical image.

2. An image processing apparatus as defined in Claim 1, wherein:

   the division line setting section sets a line that passes through the center point of the surface of the subject's body as the division line for a predetermined medical image from among the plurality of medical images, and sets lines having the same coordinate positions as the division line of the predetermined medical image as the division lines in medical images among the plurality of medical images other than the predetermined medical image.

3. An image processing apparatus as defined in Claim 1, wherein:

   the division line setting section sets a line that passes through the center point of a predetermined medical image from among the plurality of medical images as the division line for the predetermined medical image, and sets lines having the same coordinate positions as the division line of the predetermined medical image as the division lines in medical images among the plurality of medical images other than the predetermined medical image.

4. An image processing apparatus as defined in Claim 1, wherein:

   the division line setting section sets a line that passes through the center point of the outline of the subject's ribs within a predetermined medical image from among the plurality of medical images as the division line for the predetermined image, and sets lines having the same coordinate positions as the division line of the predetermined medical image as the division lines in medical images among the plurality of medical images other than the predetermined medical image.

**5.** An image processing apparatus as defined in Claim 1,
wherein:

the division line setting section sets a line that passes through two external tangential points along the surface of the subject's body within a predetermined medical image from among the plurality of medical images as the division line for the predetermined image, and sets lines having the same coordinate positions as the division line of the predetermined medical image as the division lines in medical images among the plurality of medical images other than the predetermined medical image.

**6.** An image processing apparatus as defined in any one of Claims 1 through 5, wherein:

the pseudo three dimensional medical image generating section executes the intensity projection method employing the MIP method.

**7.** An image processing apparatus as defined in any one of Claims 1 through 6, wherein:

the first side is the side of the subject toward the subject's abdomen, and the second side is the side of the subject toward the subject's back.

**8.** An image processing apparatus as defined in any one of Claims 1 through 6, wherein:

the first side is the left side of the subject, and the second side is the right side of the subject.

**9.** An image processing apparatus as defined in Claim 1,
wherein:

the division line setting section sets two division lines that divides subject regions that represent the subject into four regions within each of the plurality of medical images; and
the pseudo three dimensional medical image generating section generates four pseudo three dimensional medical images corresponding to the four regions by executing an intensity projection method, based on a plurality of sets of image data that represent four subject regions which are present within the four regions toward each side of the division lines.

**10.** An image processing apparatus as defined in any one of Claims 1 through 8, wherein:

the pseudo three dimensional medical image generating section administers different gradation processes on the first pseudo three dimensional medical image and the second pseudo three dimensional medical image.

**11.** An image processing apparatus as defined in any one of Claims 1 through 10, further comprising:

an input section (4), for inputting specified points within the medical images; and
a calculating section (5), for calculating points within the pseudo three dimensional medical image corresponding to the specified points input within the medical images; and wherein:

the display section displays the medical images, the pseudo three dimensional medical image, and markers that indicate the calculated corresponding points within the pseudo three dimensional medical image along with the pseudo three dimensional medical image.

**12.** An image processing apparatus as defined in any one of Claims 1 through 10, further comprising:

an input section (4), for inputting specified points within the displayed pseudo three dimensional medical images; and
a calculating section (5), for calculating points within the medical images corresponding to the specified points input within the pseudo three dimensional medical image; and wherein:

the display section displays the medical images, the pseudo three dimensional medical image, and markers that indicate the corresponding points within the medical images along with the medical images.

**13.** An image processing apparatus as defined in Claim 12, wherein:

the pseudo three dimensional medical image generating section generates the pseudo three dimensional medical images by searching for each point along each of a plurality of lines that connect a predetermined viewpoint and a plurality of projected pixels on a predetermined projection surface and selecting the pixel value of one of the points based on a predetermined first criterion, and correlates the position of the selected point with the projected pixel that corresponds to the selected point; and

the calculating section determines the position of the corresponding point within the medical images that correspond to the specified point, based on the position which is correlated with the projected pixel.

**14.** An image processing apparatus as defined in Claim 13, wherein:

the pseudo three dimensional medical image generating section selects the selected point based on a predetermined second criterion in the case that there are a plurality of points that satisfy the first criterion.

**15.** An image processing apparatus as defined in either one of Claim 13 and Claim 14, wherein:

the pseudo three dimensional medical image generating section calculates integrated values of pixel values of each of the points within a predetermined search range in the vicinities of each point along the lines, which are the targets of searching, during the search along the lines, and selects the pixel value of the selected point based on the first criterion regarding the integrated values.

**16.** An image processing apparatus as defined in Claim 12, wherein:

the display section displays a pseudo three dimensional medical image that includes the position corresponding to the specified point input by the input section.

**17.** An image processing apparatus as defined in any one of Claims 12 through 16, wherein:

the pseudo three dimensional medical image generating section changes the projection direction of the intensity projection method, based on the position of the specified point input by the input section.

**18.** An image processing apparatus as defined in either one of Claim 11 and Claim 17, wherein:

the display section displays an image, in which the subject regions which are present toward the second sides of the division lines within the medical images are emphasized, and markers that indicate the projection direction of the intensity projection method within the second pseudo three dimensional medical image together.

**19.** An image processing method for displaying pseudo three dimensional medical images, which are generated by executing an intensity projection method based on a plurality of medical images, which are obtained in advance, that represent transverse cross sections of a subject, comprising the steps of:

setting division lines within each of the plurality of medical images that divide subject regions that represent the subject in the front to back direction to display the subject regions separately, such that thoracic bones in the front to back direction of the projection direction of the subject are not displayed in an overlapping manner within the displayed pseudo three dimensional image;

generating a first pseudo three dimensional medical image by executing an intensity projection method based on a plurality of sets of image data that represent subject regions which are present toward first sides of the plurality of images which are divided by the division lines, and for generating a second pseudo three dimensional medical image by executing an intensity projection method based on a plurality of sets of image data that represent subject regions which are present toward second sides of the plurality of images which are divided by the division lines; and

displaying at least one of the first pseudo three dimensional medical image and the second pseudo three dimensional medical image.

**20.** A computer readable recording medium having recorded thereon an image processing program for displaying pseudo three dimensional medical images, which are generated by executing an intensity projection method based on a plurality of medical images, which are obtained in advance, that represent transverse cross sections of a subject, that causes a computer to execute the procedures of:

setting division lines within each of the plurality of medical images that divide subject regions that represent the subject in the front to back direction to display the subject regions separately, such that thoracic bones in the front to back direction of the projection direction of the subject are not displayed in an overlapping manner within the displayed pseudo three dimensional image;

generating a first pseudo three dimensional medical image by executing an intensity projection method based on a plurality of sets of image data that represent subject regions which are present toward first sides of the plurality of images which are divided by the division lines, and for generating a second pseudo three dimensional medical image by executing an intensity projection method based on a plurality of sets of image data that represent subject regions which are present toward second sides of the plurality of images which are divided by the division lines; and

displaying at least one of the first pseudo three dimensional medical image and the second pseudo three dimensional medical image.

# FIG.1

IMAGE OBTAINING SECTION — 1
→ DIVISION LINE SETTING SECTION — 2
→ PSEUDO THREE DIMENSIONAL MEDICAL IMAGE GENERATING SECTION — 3
→ DISPLAY SECTION — 6

CALCULATING SECTION — 5

INPUT SECTION — 4

10

EP 2 196 958 A2

# FIG.2

(START)

#1
OBTAIN PLURALITY OF MEDICAL IMAGES

#2
SET DIVISION LINES WITHIN MEDICAL IMAGES

#3
EXECUTE INTENSITY PROJECTION METHOD

#4
GENERATE AND DISPLAY PSEUDO
THREE DIMENSIONAL MEDICAL IMAGES

(END)

# FIG.3

FIG.4

FIG.5

# FIG.6

I1

L2    I2

I3    L3

L1

# FIG.7

R

P2    L4

P3

⇧
PROJECTION DIRECTION

# FIG.8

PIXEL
VALUE

3.5

3    X₁    X₂    X₃    X₄

2.5

2

1.5

1

0.5

0
0    10    20    30    40    50

POSITION ALONG
SEARCHED LINE

**FIG.9**

```
        ( START )
            │
            ▼
                            #11
┌───────────────────────────────┐
│  USER SETS MAXIMUM PIXEL VALUE │
│     DETERMINING METHOD         │
└───────────────────────────────┘
            │
            ▼    #12
         ╱──────────╲
        ╱   WHICH     ╲        INDIVIDUAL PIXEL VALUES
        ╲ METHOD SET? ╱─────────────────────────┐
         ╲──────────╱                           │
   INTEGRATED │                                 │
    VALUES │      #13                           ▼        #14
┌───────────────────────┐          ┌───────────────────────┐
│  USER SETS ALLOWABLE  │          │  USER SETS ALLOWABLE  │
│      RANGE ε AND      │          │      RANGE ε          │
│  INTEGRATING RANGE s  │          └───────────────────────┘
└───────────────────────┘                      │
            │              #15                  │
            ▼◄────────────────────────────────┘
┌───────────────────────────────┐
│ USER SELECTS SELECTION CRITERIA│
│  FOR POSITION OF APPEARANCE    │
└───────────────────────────────┘
            │
            ▼
         ( END )
```

**FIG.10**

L5

M

PROJECTION DIRECTION

**EP 2 196 958 A2**

## REFERENCES CITED IN THE DESCRIPTION

**Patent documents cited in the description**

- JP 7021351 A
- JP 7002135 A
- JP 2007256290 A

- JP 2008093254 A
- JP 2002006044 A
- JP 2008145402 A